# EUROPÄISCHE PATENTSCHRIFT

(11) **EP 2 441 508 B1**
(45) Veröffentlichungstag und Bekanntmachung des Hinweises auf die Patenterteilung: **07.08.2013**
(21) Anmeldenummer: 10013558.1
(22) Anmeldetag: 12.10.2010
(51) Int. Cl.: B01D 33/23

(54) **Filterscheibe, Scheibenfilter und Filtrationsverfahren**
Filter disc, disc filter and filtration method
Disque filtrant, filtre à disque et procédé de filtration

(43) Veröffentlichungstag der Anmeldung: 18.04.2012
(73) Patentinhaber: BOKELA Ingenieurgesellschaft für Mechanische Verfahrenstechnik mbH, 76131 Karlsruhe (DE)
(72) Erfinder: Bott, Reinhard Dr.-Ing., 76337 Waldbronn (DE); Langeloh, Thomas Dr.-Ing., 69126 Heidelberg (DE)
(74) Vertreter: Wunderlich, Rainer

(56) Entgegenhaltungen:
- WO-A1-2009/040482
- FR-A1- 2 595 957

## Beschreibung

Die Erfindung betrifft eine Filterscheibe mit einer Vielzahl von Filterelementen in Form etwa eines Kreisscheibensegmentes, welche zum Bilden einer kreisscheibenförmigen Filterfläche sternförmig an einer Nabe angeordnet sind, einer ringförmigen Felge, welche entlang eines Außenumfangs der Filterfläche angeordnet ist, und mehreren Speichen, welche die Nabe mit der Felge verbinden.

Die Erfindung betrifft weiterhin einen Scheibenfilter mit mindestens einer entsprechenden Filterscheibe.

Weiterhin betrifft die Erfindung ein Filtrationsverfahren zum Filtrieren einer Suspension mit einer Filterscheibe mit einer Vielzahl von Filterelementen in Form etwa eines Kreisscheibensegmentes, welche zum Bilden einer kreisscheibenförmigen Filterfläche sternförmig an einer Nabe angeordnet sind, einer ringförmigen Felge, welche entlang des Außenumfangs der Filterfläche angeordnet ist, und mehreren Speichen, welche die Nabe mit der Felge verbinden.

Scheibenfilter der genannten Art weisen üblicherweise eine Mehrzahl flacher Filterscheiben auf, die jeweils segmentartig aufgebaut sind. Über die einzelnen Filtersegmente wird üblicherweise ein beutelförmiges Filtermedium aufgespannt. Das zu filtrierende Medium tritt durch das Filtermedium hindurch und wird über Hohlräume bzw. Kanäle im Segment abgeleitet. Über einen an den Filtersegmenten ausgebildeten Auslass kann das Filtrat austreten und über die Nabe der Filterscheibe abgeleitet werden.

Scheibenfilter werden zur kuchenbildenden Filtration eingesetzt. Die Filterscheiben sind üblicherweise über einem die zu filtrierende Suspension aufnehmenden Suspensionstrog drehbar gelagert und tauchen teilweise in die zu filternde Suspension ein. Oberhalb der Suspension wird der sich auf den Außenflächen bildende Filterkuchen regelmäßig von dem Filtermedium abgenommen. Mit der Zeit setzt sich das Filtermedium aber zu und muss zum Erhalt der Filterleistung gewechselt werden.

Hierzu werden von der Nabe die Filtersegmente abgenommen und die Filterbeutel ausgetauscht.

Für eine effiziente Kuchenabnahme ist eine hohe Rundlaufgenauigkeit der Filterscheibe erforderlich. Zudem ist aufgrund von dynamischen Strömungskräften im Suspensionstrog, die durch die in den Filtertrog einströmende Suspension und die Filtersegmente eintretende Suspension hervorgerufen werden, eine stabile Konstruktion erforderlich. Die bekannten Filtersegmente sind daher üblicherweise sehr stabil aufgebaut und dementsprechend schwer und materialaufwendig. Dies erschwert den Wechsel der Filterbeutel erheblich.

Ein Scheibenfilter mit einer Filterscheibe ist aus der DE 299 03 511 U1 bekannt. Die einzelnen Filtersegmente sind auf einer zentral angeordneten Filterwelle montiert und können so einzeln ausgetauscht werden.

Eine weitere Filterscheibe ist in der FR 2 779 973 beschrieben. Die Filterscheibe ist aus einer Welle, einem äußeren, aus einzelnen Elementen bestehenden, die einzelnen Filtersegmente verbindenden Rahmen und einer Vielzahl von Filtersegmenten aufgebaut, die den äußeren Rahmen letztendlich mit der Welle verbinden.

Es ist bekannt, bei einer Filterscheibe die Segmente mit Speichen in Form von Zugankern an der Nabe zu halten und mit U-Profilen am äußeren Umfang zu verspannen. Die U-Profile bilden zusammen mit einem äußeren Rand der Filtersegmente im montierten Zustand einen integralen Rahmen der Filterscheibe. Zur Beibehaltung der Rundlaufgenauigkeit der Filterscheibe können nur einzelne oder wenige Filtersegmente gleichzeitig ausgebaut werden.

WO 2009/040482 A1 offenbart eine Filtereinrichtung, welche eine Scheibe mit einer Felge umfasst, die eine Mehrzahl von Filtersektoren versteift. Die Scheibe wird vor Montage der Filtersegmente durch temporär eingesetzte Speichen stabilisiert.

Ein selbsttragendes Speichenrad zum Einsetzen einer Mehrzahl von Filtersegmenten ist in FR 2 595 957 A1 beschrieben. Das Speichenrad umfasst eine Mehrzahl von Speichen, welche die einzelnen Aufnahmeräume für die Sektoren begrenzen.

Der Erfindung liegt die **Aufgabe** zugrunde, eine Filterscheibe und einen Scheibenfilter bereitzustellen, welche bei einem einfachen und kostengünstigen Aufbau besonders wartungsfreundlich und stabil sind.

Der Erfindung liegt weiterhin die Aufgabe zugrunde, ein entsprechendes Filtrationsverfahren bereitzustellen.

Die Aufgabe wird durch eine Filterscheibe mit den Merkmalen des Anspruchs 1, einen Scheibenfilter mit den Merkmalen des Anspruchs 9 und ein Filtrationsverfahren mit den Merkmalen des Anspruchs 10 gelöst.

Vorteilhafte Ausführungsformen und Weiterbildungen der Erfindung sind in den abhängigen Ansprüchen sowie der nachfolgenden Beschreibung und den beigefügten Figuren angegeben.

Bei der erfindungsgemäßen Filterscheibe ist vorgesehen, dass durch die Speichen und die Felge ein selbsttragendes Speichenrad mit Aufnahmeräumen für Filterelemente gebildet ist, in welche oder aus welchen die Filterelemente bei geschlossener Felge einsetzbar beziehungsweise entfernbar sind.

Bei dem erfindungsgemäßen Filtrationsverfahren ist vorgesehen, dass durch die Speichen und die Felge ein selbsttragendes Speichenrad mit Aufnahmeräumen für die Filterelemente gebildet ist und dass mindestens ein Filterelement bei geschlossener Felge in einen Aufnahmeraum eingesetzt oder aus diesem entfernt wird.

Ein Grundgedanke der Erfindung kann darin gesehen werden, bei einer Filterscheibe Trag- und Filterfunktion zu trennen. Hierzu wird ein eigenstabiles oder selbsttragendes Speichenrad bereitgestellt, in welches ein oder mehrere Filterelemente eingesetzt werden können. Bei einem eigenstabilen Speichenrad ist die Stabilität des Speichenrades weitgehend unabhängig von der Anzahl der eingesetzten Filterelemente. Das Speichenrad übernimmt Betriebskräfte, wie beispielsweise Gewichtskräfte, Momente, Schwingungen und Strömungskräfte, und leitet diese über die Speichen in die Nabe beziehungsweise die Filterwelle ein. Hierdurch kann eine sehr stabile selbsttragende Konstruktion erreicht werden.

Es wird demnach eine Filterscheibe bereitgestellt, bei der durch Speichen und eine Felge ein selbsttragendes Rad entsteht, das mit der Nabe eines Scheibenfilters verbunden ist und bei dem in den Aufnahmeräumen zwischen den Speichen Filterelemente eingebaut werden können, die über eine hydraulische Verbindung Filtrat in Sammelleitungen in der Nabe abführen können. Eine oder mehrere solcher Filterscheiben sind Bestandteil eines kompletten Scheibenfilters.

Durch das eigenstabile Speichenrad werden die eingesetzten Filterelemente von Betriebskräften entlastet. Die Kräfte können direkt in das Speichenrad geleitet werden. Auf die Filterelemente wirken im Wesentlichen nur noch der Filtrations- und Rückblasedruck. Damit ist die Filterelementausführung in weiten Grenzen variierbar und kaum durch mechanische Stabilitätsanforderungen begrenzt. Die Filterelemente sind somit in großem Maße an spezielle Filtrationsanforderungen anpassbar. Die Materialausführung ist weitgehend frei wählbar. Insbesondere können günstige und leichte Kunststoffsegmente gewählt werden.

Ein besonderer Vorteil der Erfindung besteht darin, dass das Speichenrad grundsätzlich nur bei der Installation einmal vom Fachpersonal aufgebaut und ausgerichtet werden muss. Im späteren Betrieb können einzelne oder sogar alle Filterelemente bei Bedarf einfach getauscht werden, ohne dass das Speichenrad, welches auch als Rahmenrad bezeichnet werden kann, zwingend hinsichtlich seines Rundlaufes neu justiert werden muss. Hierdurch wird eine hohe Rundlaufgenauigkeit der Filterscheibe auch bei längerem Betrieb erzielt. Ein Element- oder Segmentwechsel oder andere Wartungsarbeiten an den Filterelementen können ohne Änderung der Trag- und Führungseigenschaft durchgeführt werden.

Das Speichenrad weist als wesentliche Elemente eine Mehrzahl von Speichen und mindestens eine umlaufende, geschlossene Felge auf. Die Zwischenräume zwischen jeweils zwei Speichen bilden trapezförmige Aufnahmeräume, in welche die Filterelemente, welche auch als Filtersegmente bezeichnet werden können, eingebaut werden können. Die Aufnahmeräume sind radial innen durch die Nabe und radial außen durch die Felge begrenzt. Jeder Aufnahmeraum ist durch zwei Speichen seitlich begrenzt.

Die ringförmige Felge und die Speichen bilden einen eigenständigen kreisförmigen Rahmen, an dem die Filterelemente in geeigneter Weise befestigt werden können.

Die einzelnen Speichen sind vorzugsweise mittels Klemmeinrichtungen an der Nabe und/oder der Felge befestigt und müssen daher nicht verschweißt oder gebohrt werden. Hierdurch entsteht keine Materialschwächung, so dass eine nahezu optimale Ausnutzung des gewählten Werkstoffs realisiert werden kann. Auch können die Speichen hinsichtlich ihrer Anzahl und ihrer Befestigung an der Nabe und/oder der Felge variiert werden.

Durch den modularen Aufbau des Speichenrads, welches mindestens aus der Nabe, den Speichen und der Felge besteht, kann das Speichenrad unabhängig von der zentralen Welle relativ einfach hinsichtlich Abmessungen und Form an spezifische Betriebsanforderungen angepasst werden. Insbesondere sind die Speichen in Länge, Form und Werkstoff variierbar, um möglichst optimale Eigenschaften bezüglich Festigkeit und Biegesteifigkeit zu erzielen. In einer bevorzugten Ausführung sind die Speichen aus Standardprofilen, zum Beispiel aus hochfestem Werkstoff, hergestellt. Dabei handelt es sich vorzugsweise um abgelängtes Stangenmaterial.

Grundsätzlich kann die Felge einstückig ausgebildet sein. Zur Vereinfachung der Montage, insbesondere bei Filterscheiben mit einem großen Durchmesser, ist es jedoch bevorzugt, dass die Felge aus einzelnen Felgenelementen oder Felgensegmenten zusammengesetzt ist. Die einzelnen Felgenelemente oder Felgensegmente können eine Kreissegmentform aufweisen, beispielsweise einen Halb-, Viertel- oder Achtelkreis, so dass sich bei geschlossener Felge eine etwa kreisförmige Felge ergibt. Alternativ können die Felgensegmente auch gerade Elemente sein, so dass sich bei zusammengesetzter Felge eine polygonale Form der Felge ergibt, welche einer Kreisform angenähert ist. Vorzugsweise ist die Anzahl der Felgensegmente eine gerade Zahl.

In dem Speichenrad selbst kann auch ein eigenständiger Erfindungsaspekt gesehen werden.

Die Filterelemente weisen vorzugsweise eine Trapezform auf, die im Wesentlichen an die trapezförmigen Aufnahmeräume angepasst ist. Die Filterelemente sind für die eigentliche Filtration zuständig und weisen hierzu jeweils mindestens ein Filtermedium, beispielsweise ein Filtersieb oder ein Filtertuch, auf. Die Filterelemente umfassen vorzugsweise einen Segmentrahmen, an dem das mindestens eine Filtermedium befestigt ist. Weiterhin ist in jedem Filterelement ein Hohlraum gebildet, in den ein zu filtrierendes Medium, zum Beispiel eine Suspension, über das Filtermedium eintreten kann. Der Hohlraum des Filterelements ist von mindestens einer Seite durch das Filtermedium begrenzt.

Das Filtermedium kann einteilig oder mehrteilig aufgebaut sein. Zum Ableiten des Filtrats aus dem Hohlraum umfasst jedes Filterelement mindestens eine Filtratauslassöffnung, die vorzugsweise an einem radial inneren Bereich des Filterelements ausgebildet ist.

Zum Aufbau der Filterscheibe werden die Filterelemente in die Aufnahmeräume des Speichenrades eingesetzt. Grundsätzlich kann eine beliebige Anzahl von Filterelementen eingesetzt werden. Vorzugsweise ist die Anzahl der Aufnahmeräume eine gerade Zahl. Das Aufbauprinzip erlaubt eine nahezu beliebige Variation von Größe, Volumen, Form und/oder Werkstoff.

Eine bevorzugte Ausführungsform der Filterscheibe ist dadurch gekennzeichnet, dass jeweils zwischen zwei Speichen je ein trapezförmiger Aufnahmeraum gebildet ist, in welchen mindestens ein Filterelement einsetzbar ist, und dass jedem Aufnahmeraum mindestens eine radiale Öffnung an der Nabe zugeordnet ist, welche mit einer Filtratauslassöffnung eines Filterelements verbindbar ist. Zwischen jeweils zwei Speichen ist somit mindestens ein einzelnes Filterelement aufgenommen. Hierdurch wird eine gute Stabilität der Filterscheibe erreicht. Zudem kann das jeweilige Element stabil und sicher an dem Speichenrad befestigt werden. Jedem Aufnahmeraum ist zum Abführen des Filtrats mindestens eine radiale Öffnung zugeordnet, die mit einem Filtratkanal innerhalb der Nabe leitungsverbunden ist.

In einer bevorzugten Ausführungsform ist die Nabe als Teil einer Filterwelle ausgebildet. Die Nabe ist vorzugsweise drehbar gelagert und umfasst eine Hohlwelle, in welcher der Filtratkanal gebildet ist.

Eine weitere bevorzugte Ausführungsform ist dadurch gegeben, dass zum Befestigen der Filterelemente an dem Speichenrad und/oder im Aufnahmeraum die Befestigungseinrichtungen an der Nabe, den Speichen und/oder der Felge angeordnet sind. Die Befestigungseinrichtungen sind insbesondere so ausgeführt, dass die Filterelemente in radialer Richtung, axialer Richtung und/oder in Umfangsrichtung in ihrem jeweiligen Aufnahmeraum befestigt oder fixiert werden können. Besonders bevorzugt ist es, wenn die Befestigungseinrichtungen eine Rotation der Filterelemente um ihre eigene Längsachse ermöglichen. Jedes Filterelement kann separat lösbar an dem Speichenrad befestigt werden.

Die Befestigungseinrichtungen können an der Nabe angeordnet sein und eine Aufnahmeeinrichtung zur formschlüssigen Aufnahme eines Filterelements, insbesondere eines Segmentfußes, aufweisen. Alternativ hierzu oder zusätzlich können Befestigungseinrichtungen an den Speichen vorgesehen sein.

Eine besonders stabile Befestigung der Filterelemente wird erreicht, wenn die Bewegung der Filterelemente durch die Befestigungseinrichtungen nicht nur begrenzt wird, sondern die Filterelemente kraftschlüssig an den Befestigungseinrichtungen gehalten werden. Besonders bevorzugt ist es, wenn die Filterelemente zwischen zwei Befestigungseinrichtungen einklemmbar und/oder verspannbar sind. Die Befestigungseinrichtungen können demnach auch beispielsweise als Klemmeinrichtungen bezeichnet werden.

Die Filterelemente sind in einer bevorzugten Ausgestaltung lösbar, insbesondere über eine Steck-, Schraub-, Klemm- und/oder Bajonettverbindung, an dem Speichenrad befestigt. Hierdurch werden sichere und einfache Befestigungsmöglichkeiten bereitgestellt, die eine einfache und schnelle Austauschbarkeit der Filterelemente ermöglichen. Insbesondere kann ein Filterelement weitgehend ohne Werkzeug ein- und ausgebaut werden, wobei ein Form- und/oder Kraftschluss gewährleistet wird.

Eine besonders vorteilhafte Befestigung der Filterelemente wird dadurch erzielt, dass die Filterelemente durch eine Drehung an dem Speichenrad befestigbar sind. Bei der Drehung handelt es sich insbesondere um eine Eigendrehung, also eine Drehung der Filterelemente um eine eigene Rotationsachse. Die Filterelemente müssen zur Befestigung lediglich ausgehend von einer Freigabeposition in eine Eingriffs- oder Befestigungsposition gedreht werden. Die Drehung erfolgt dabei vorzugsweise ausgehend von einer Querposition des Filterelements, in welcher das Filterelement quer zu einer Radfläche des Speichenrades angeordnet ist, um etwa 90°. Unter der Radfläche des Speichenrades ist hierbei insbesondere eine Fläche zu verstehen, die senkrecht zur Längsachse der Nabe beziehungsweise der Filterwelle verläuft. Die Befestigung erfolgt durch die Drehung der Filterelemente. Zur Befestigung der Filterelemente sind vorzugsweise keine separaten Befestigungselemente, wie beispielsweise Schrauben oder dergleichen, erforderlich.

Weiter ist es bevorzugt, wenn an der Nabe und/oder der Felge Drehaufnahmen für die Filterelemente vorgesehen sind, durch welche die Filterelemente drehbar, insbesondere um eine zur Nabe radiale Drehachse, gelagert sind. Die Drehaufnahmen sind vorzugsweise so gestaltet, dass die Filterelemente in axialer Richtung in die Drehaufnahmen eingesetzt werden können. Bei eingesetztem Filterelement wird durch die Drehaufnahmen dann vorzugsweise eine Translation der Filterelemente in radialer Richtung und/oder in Umfangsrichtung begrenzt oder unterbunden. Vorzugsweise umfassen die Drehaufnahmen jeweils einen Drehzapfen oder eine Zapfenaufnahme. Der Drehzapfen beziehungsweise die Zapfenaufnahme kann an der Nabe, den Speichen und/oder der Felge vorgesehen sein.

Eine gute Lagerung und ein einfaches Einsetzen beziehungsweise Entfernen der Filterelemente wird erreicht, wenn die Drehaufnahmen jeweils mittig zwischen zwei Speichen vorgesehen sind. Durch die mittigen Drehaufnahmen entstehen kaum Hebelkräfte, wenn die Filterelemente in die Drehaufnahme eingesetzt sind. Damit wird die Belastung des Speichenrades reduziert und es ist eine einfache, weitgehend kraftfreie Rotation der Filterelemente um ihre Drehachse möglich.

Zur sicheren Fixierung der Filterelemente können in einer weiteren bevorzugten Ausgestaltung der Erfindung Riegeleinrichtungen vorgesehen sein, durch welche die Filterelemente in einer Betriebsposition, in welcher die Filterelemente parallel zur Radfläche des Speichenrades angeordnet sind, verriegelt werden können. Durch die Riegeleinrichtungen, welche auch als Fixierungseinrichtungen oder Halterungen bezeichnet werden können, wird insbesondere eine Drehung der Filterelemente um ihre eigene Achse, insbesondere um eine zur Nabe radiale Achse, verhindert. Insbesondere wird eine definierte, gerade Ausrichtung der Filterelemente zum Bilden der kreisscheibenförmigen Filterfläche erzielt.

Die Befestigungs- und/oder Riegeleinrichtungen sind vorzugsweise lösbar und austauschbar an dem Speichenrad montiert. Das Speichenrad ist so zur Aufnahme unterschiedlich gestalteter Filterelemente geeignet. Auch nach Aufbau des Speichenrades können später noch die Filterelemente und/oder die Befestigungs- und/oder Riegeleinrichtungen variiert und an spezielle Bedingungen angepasst werden.

Der Scheibenfilter mit einer Filterscheibe umfasst mindestens einen Suspensionstrog zur Aufnahme einer zu filternden Suspension, in welchen die Filterscheibe bereichsweise eingetaucht ist.

Das erfindungsgemäße Filtrationsverfahren ist vorzugsweise dadurch weitergebildet, dass mindestens ein Filterelement aus einem Aufnahmeraum entfernt wird, ein Filtermedium des Filterelements ausgetauscht oder aufbereitet wird und anschließend das Filterelement mit dem ausgetauschten oder aufbereiteten Filtermedium erneut in den Aufnahmeraum eingesetzt wird. Das Filtermedium ist vorzugsweise wie ein Beutel konfektioniert, der einfach auf das Filterelement aufgezogen ist.

Die Erfindung wird nachfolgend anhand einer bevorzugten Ausführungsform der Erfindung, welche in den beigefügten schematischen Zeichnungen dargestellt ist, weiter erläutert. Hierin zeigt:
- Fig. 1: eine perspektivische Ansicht einer erfindungsgemäßen Filterscheibe;
- Fig. 2: das Einsetzen eines Filterelements in einen Aufnahmeraum;

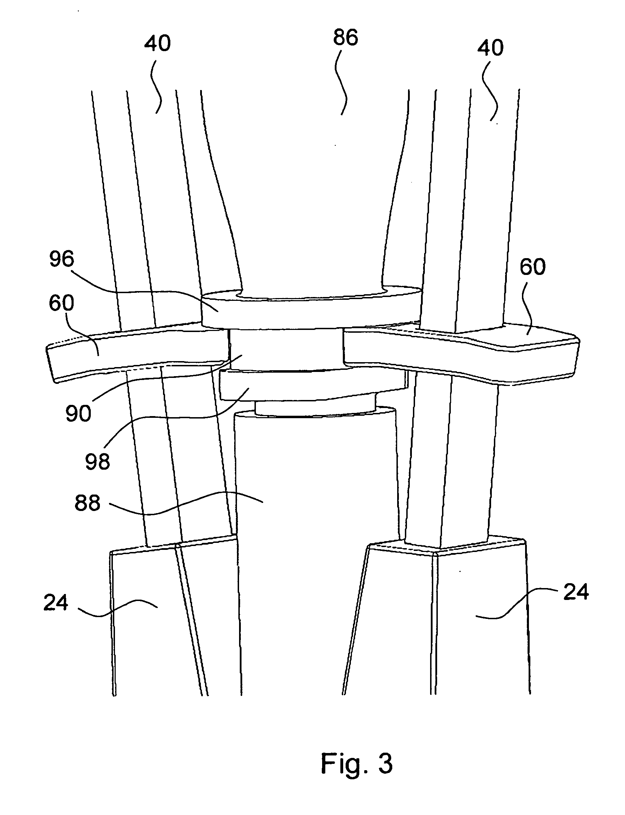

- Fig. 3: einen radial inneren Bereich eines Aufnahmeraums mit eingesetztem Filterelement;

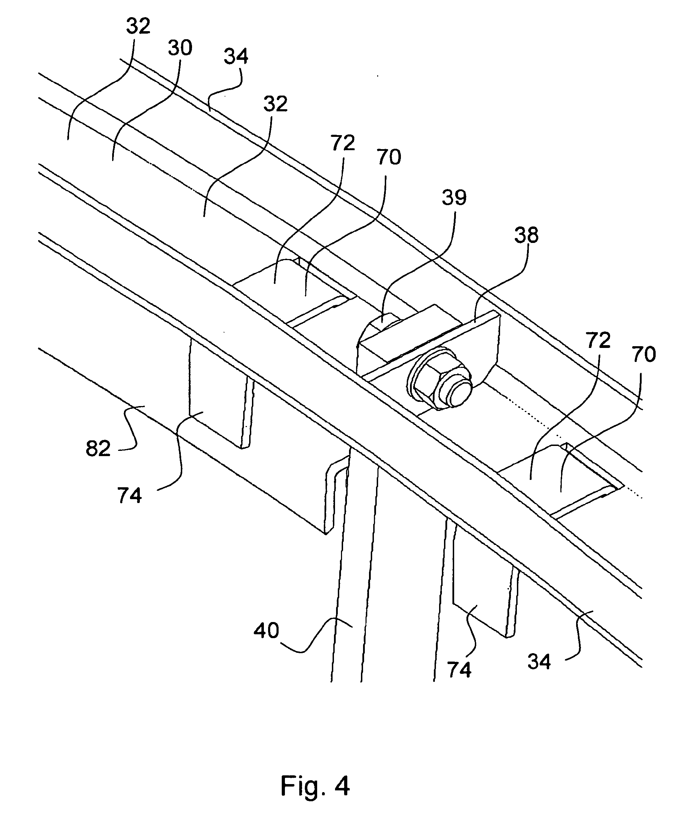

- Fig. 4: einen radial äußeren Bereich eines Aufnahmeraums mit eingesetztem Filterelement;
- Figuren 5 bis 7: die Befestigung eines Filterelements im radial inneren Bereich eines Aufnahmeraums; und
- Fig. 8: die Fixierung eines Filterelements am radial äußeren Bereich eines Aufnahmeraums.

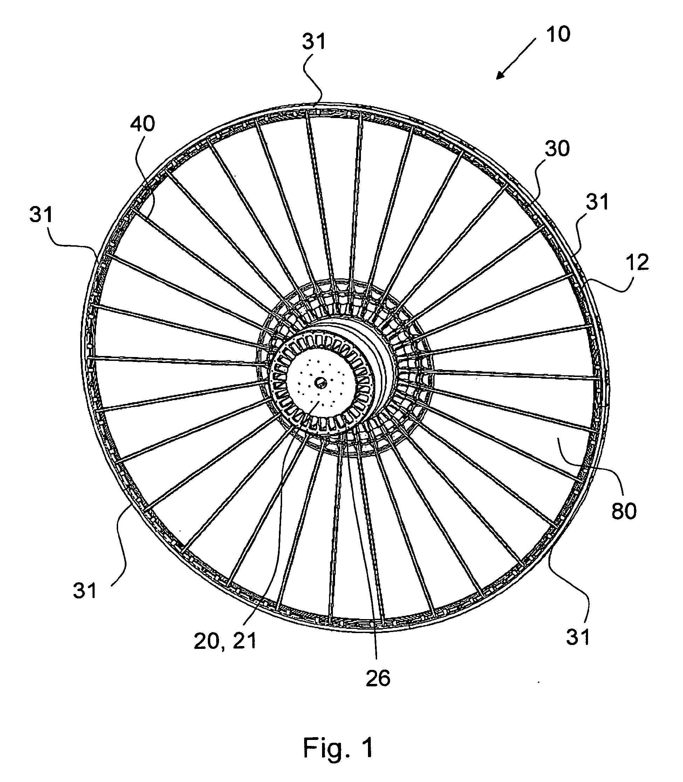

Fig. 1 zeigt eine erfindungsgemäße Filterscheibe 10 im montierten Zustand. Die Filterscheibe 10 umfasst ein Speichenrad 12 und eine Mehrzahl von kreissegmentförmigen Filterelementen beziehungsweise Filtersegmenten 80, die in ihrer Gesamtheit eine etwa kreisförmige Filterfläche bilden.

Das Speichenrad 12 umfasst eine drehbar gelagerte Nabe 20, welche eine Rotationswelle der Filterscheibe 10 bildet, eine Felge 30 und eine Mehrzahl von Speichen 40. Die Felge 30 ist koaxial zu der Nabe 20 angeordnet und über die Speichen 40 mit der Nabe 20 verbunden ist. Die Speichen 40 sind in Bezug auf eine Drehachse der Nabe 20 radial ausgerichtet. Das Speichenrad 12 ist ohne eingesetzte Filterelemente 80 eigenstabil, das heißt die Felge 30 wird ausschließlich durch die Speichen 40 an der Nabe 20 gehalten.

Die Felge 30 ist aus mehreren Felgenelementen 31 zusammengesetzt. Jedes einzelne Felgensegment 31 bildet ein Verbindungselement und die einzelnen Felgenelemente 31 können miteinander verschraubt, verschweißt oder auf andere geeignete Weise miteinander verbunden sein. Grundsätzlich ist es aber auch möglich, die Felge 30 einstückig herzustellen. Die Felge 30 umfasst ein weitestgehend geschlossenes Felgenband mit einer axialen Ausdehnung und einer Ausdehnung in Umfangsrichtung.

In der dargestellten beispielhaften Ausführungsform ist die Felge 30 U-förmig gestaltet und umfasst einen inneren, sich im Wesentlichen in Umfangsrichtung und axialer Richtung erstreckenden Basisbereich 32, welcher auch als das Felgenband bezeichnet werden kann, und zwei seitliche Stege 34. Die Stege 34 erstrecken sich ausgehend von dem Basisbereich 32 in radialer Richtung nach außen.

An der Nabe 20 sind zur Aufnahme der Speichen 40 Klemmeinrichtungen 24 vorgesehen. Die Klemmeinrichtungen 24 sind an der Nabe 20 befestigt und insbesondere fest mit der Nabe 20 verbunden. Jede der Speichen 40 ist in einer Klemmeinrichtung 24 eingespannt und so mittels der Klemmeinrichtung 24 an der Nabe 20 lösbar befestigt. Durch die klemmende Befestigung der Speichen 40 an der Nabe 20 wird eine Materialschwächung, wie sie beispielsweise beim Schweißen auftritt, vermieden.

Die äußeren Enden der Speichen 40 sind an der Felge 30 - ebenfalls lösbar - befestigt. Hierzu weist die Felge 30 vorzugsweise mehrere Öffnungen 36 zur Aufnahme der Speichen 40 auf. Die Anzahl der Öffnungen 36 entspricht der Anzahl der Speichen 40. Die Öffnungen 36, welche auch als Schlitze bezeichnet werden können, sind in dem Basisbereich 32 der Felge 30 gebildet. Jeder Öffnung 36 ist ein Quersteg 38 zugeordnet, welcher zwischen den Stegen 34 angeordnet ist. Zur Befestigung einer Speiche 40 an der Felge 30 ist die Speiche 40 durch die Öffnung 36 hindurchgeführt und an dem Quersteg 38 der Felge 30 mittels einer Schraube 39 befestigt.

Zwischen der Nabe 20 und der Felge 30 ist eine Mehrzahl von Aufnahmeräumen 14 zur Aufnahme der Filterelemente 80 gebildet. Im montierten Zustand der Filterscheibe 10 sind die Filterelemente 80 zwischen der Nabe 20 und der Felge 30 aufgenommen. Die einzelnen Filterelemente 80 sind dabei von der Felge 30, insbesondere dem weitgehend geschlossenen Felgenband der Felge 30, nach außen hin begrenzt und können von der Felge 30 vollständig umgeben sein. Die Felge 30, insbesondere das Felgenband, ist hierzu weitgehend geschlossen. Die Filterelemente 80 können sich radial nach außen an der Felge 30 abstützen. Die Felge 30 kann eine axiale Ausdehnung aufweisen, die im Wesentlichen mindestens der axialen Ausdehnung der Filterelemente 80 entspricht.

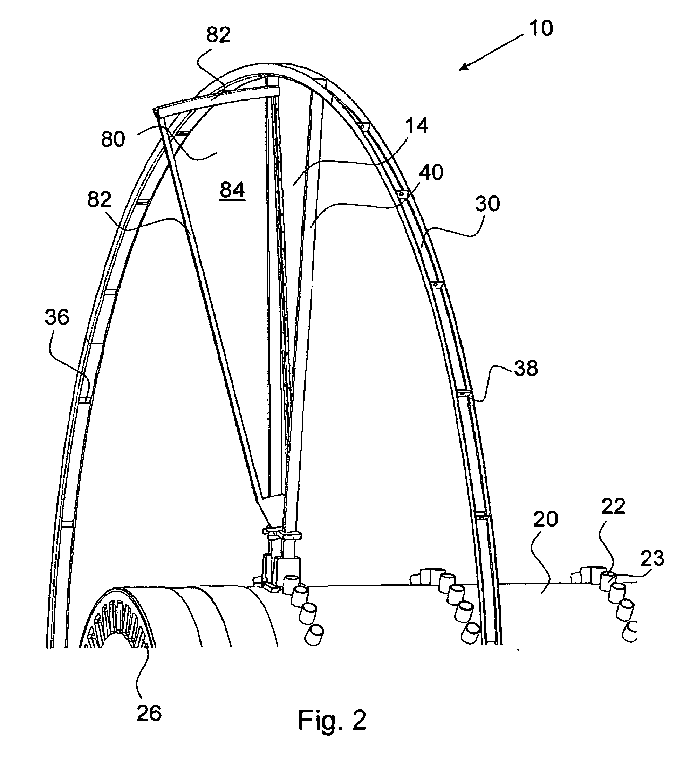

Ein einzelnes Filterelement 80 ist in Fig. 2 dargestellt. Das Filterelement 80 weist einen Rahmen 82 und einen Hohlraum 84 auf, auf dem ein Filtermedium, beispielsweise eine Filtermembran oder ein Filtertuch, befestigt ist. Ein zu filterndes Fluid kann zur Filtration über das Filtermedium in den Hohlraum 84 eintreten. An einem radial inneren Bereich des Filterelements 80 ist ein rohrförmiger Segmentfuß 86 vorhanden, in dem eine Filtratauslassöffnung gebildet ist. Die Filtratauslassöffnung ist mit dem Hohlraum 84 leitungsverbunden, um das Filtrat aus dem Hohlraum 84 abzuleiten.

An der Nabe 20 ist eine Mehrzahl von radialen Öffnungen 22 gebildet, die zum Ableiten des Filtrats mit den Filtratauslassöffnungen der Filterelemente 80 verbindbar sind. Die radialen Öffnungen 22 der Nabe 20 sind weiterhin mit einem oder mehreren axialen Filtratkanälen 26 innerhalb der Nabe 20 verbunden, um das Filtrat aus der Nabe 20 abzuleiten.

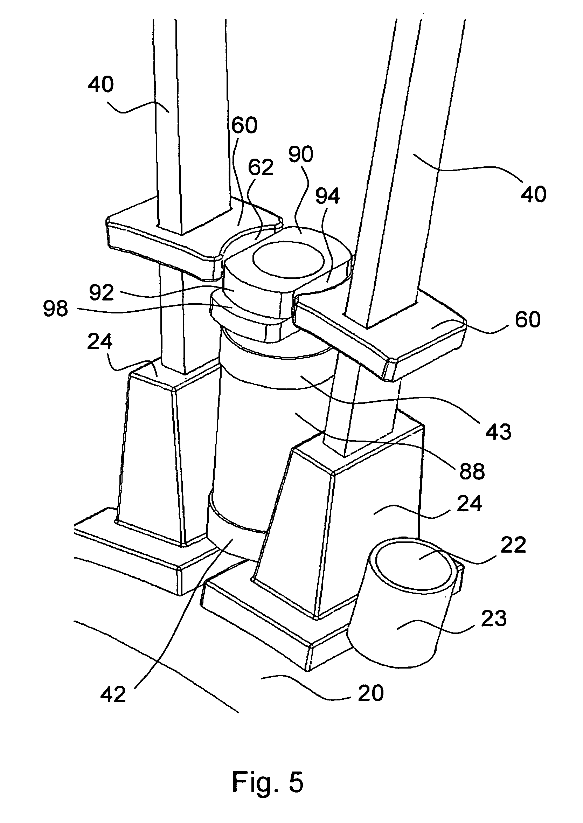

Der Segmentfuß 86 eines Filterelements 80 ist mit einer radialen Öffnung 22 der Nabe 20 fluiddicht verbindbar. Hierzu sind an der Nabe 20 Rohrstutzen 23 angeordnet, in denen die radialen Öffnungen 22 gebildet sind. Der Segmentfuß 86 eines Filterelements 80 weist einen vorzugsweise elastischen Verbindungsbereich 88 auf, der mit den Rohrstutzen 23 der Nabe 20 verbindbar ist. Der Verbindungsbereich 88 kann vorzugsweise mit einer Rohrschelle 42 an dem Rohrstutzen 23 befestigt werden. Zur Befestigung des elastischen Verbindungsbereichs 88 an einem angrenzenden Abschnitt des Segmentfußes 86 kann eine weitere Rohrschelle 43 vorgesehen werden. Die Filterelemente 80 sind drehbar um eine zur Längsachse der Nabe 20 radiale Drehachse gelagert. Zur Fixierung und/oder Befestigung eines auf den Rohrstutzen 23 aufgesetzten Filterelements 80 in dem Aufnahmeraum 14 sind Fixierungs- oder Befestigungseinrichtungen 60 vorgesehen. Die Fixierung beziehungsweise Befestigung eines Filterelements 80 ist in den Figuren 5 bis 8 näher dargestellt.

An jeder Speiche 40 des Speichenrades 12 ist jeweils eine Befestigungseinrichtung 60 befestigt. Die Befestigungseinrichtung 60 ist an der Speiche 40 vorzugsweise verspannt. Die Befestigungseinrichtung 60 weist hierzu zwei Befestigungselemente auf, die um die Speiche 40 herum angeordnet sind, so dass die Speiche 40 zwischen den Befestigungselementen eingeklemmt ist. Die Befestigungselemente sind mittels Schrauben oder anderer geeigneter Befestigungs- oder Spannmittel miteinander verspannt.

Jede Befestigungseinrichtung 60 weist mindestens einen Haltebereich 62 mit einer bogenförmigen Kontur zum Kontaktieren des Filterelements 80 auf. Gemäß der dargestellten Ausführungsform weisen die Befestigungseinrichtungen 60 jeweils zwei Haltebereiche 62 auf, um zwei in den beiden angrenzenden Aufnahmeräumen 14 eingesetzte Filterelemente 80 zu kontaktieren beziehungsweise zu halten.

Das Filterelement 80 weist an seinem Segmentfuß 86 einen Fixierungs- oder Befestigungsabschnitt 90 auf, der mit der an dem Speichenrad 12 angebrachten Fixierungs- oder Befestigungseinrichtung 60 in Eingriff gebracht werden kann. Der Befestigungsabschnitt 90 des Filterelements 80 ist so gestaltet, dass er durch eine Drehung des Filterelements 80 zwischen einer Eingriffsposition, in welcher er mit der Befestigungseinrichtung 60 in Eingriff ist, und einer Freigabeposition, in welcher er von der Befestigungseinrichtung 60 freigegeben ist, verstellbar ist. Hierzu weist der Befestigungsabschnitt 90 mindestens einen Eingriffsbereich 92 und mindestens einen Freigabebereich 94 auf. Der Segmentfuß 86 mit dem Fixierungs- oder Befestigungsabschnitt 90 kann als Bajonettfuß bezeichnet werden, durch welchen das Filterelement 80 form- und/oder kraftschlüssig an dem Speichenrad 12 befestigt werden kann.

Der Befestigungsabschnitt 90 des Filterelements 80 ist in der dargestellten Ausführungsform als ringförmiges Element ausgeführt. Der Eingriffsbereich 92 wird durch einen äußeren, bogenförmigen Umfangsbereich des ringförmigen Elements gebildet, welcher dem Haltebereich 62 der Befestigungseinrichtung 60 entspricht. Der Freigabebereich 94 ist durch eine äußere Abflachung des ringförmigen Elements gebildet. Der Freigabebereich 94 hat somit einen geringeren Abstand von einer Mittenachse des Ringelements als der Eingriffsbereich 92. Der dargestellte Befestigungsabschnitt 90 weist zwei Eingriffsbereiche 92 und zwei Freigabebereiche 94 auf, die jeweils einander gegenüberliegend mit Bezug auf die Mittenachse angeordnet sind.

Ein Filterelement 80 wird durch zwei Befestigungseinrichtungen 60 gehalten, indem der Befestigungsabschnitt 90 des Filterelements 80 zwischen den Befestigungseinrichtungen 60 eingeklemmt und/oder verspannt ist.

Zur Fixierung des Filterelements 80 in radialer Richtung weist der Befestigungsabschnitt 90 mindestens einen Anschlag 96 auf, durch welchen eine radiale Bewegung des Filterelements 80 innerhalb des Aufnahmeraums 14 begrenzt wird. In der dargestellten Ausführungsform weist der Befestigungsabschnitt 90 zwei Anschläge 96, 98 auf, die eine Bewegung des Filterelements 80 in radialer Richtung nach außen beziehungsweise nach innen einschränken oder begrenzen.

Insgesamt wird das Filterelement 80 durch die Fixierungs- oder Befestigungseinrichtungen 60 in Umfangsrichtung, in axialer Richtung und in radialer Richtung an dem Speichenrad fixiert oder befestigt. Dabei bleibt eine Drehbewegung weiter möglich.

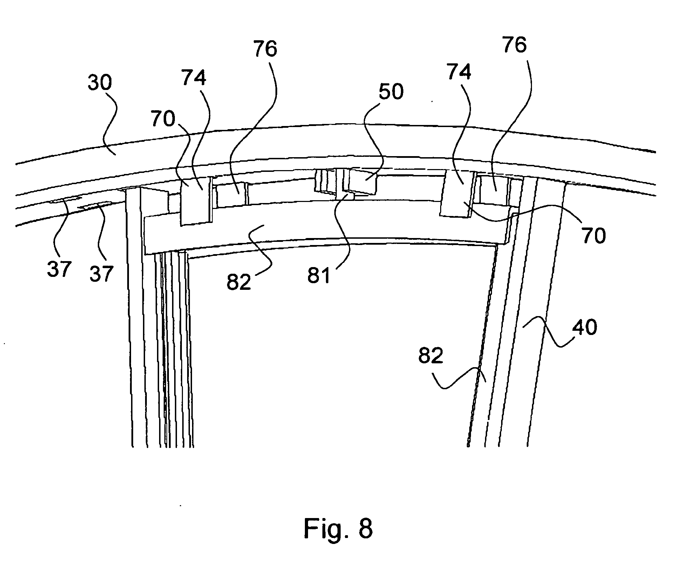

Die Fixierung und/oder Befestigung eines Filterelements 80 im radial äußeren Bereich ist in Fig. 8 dargestellt.

Zur drehbaren Lagerung des Filterelements 80 ist an der Felge 30 vorzugsweise eine Drehaufnahme 50 vorgesehen. Die Drehaufnahme 50 ist an einer inneren Umfangsfläche der Felge 30 angeordnet und kann insbesondere mittig zwischen zwei Speichen 40 vorgesehen sein, wie in Fig. 8 dargestellt. In der dargestellten Ausgestaltung ist die Drehaufnahme 50 ein in eine Axialrichtung offener Aufnahmeraum für einen Drehzapfen 81, welcher an einer äußeren Umfangsfläche des Filterelements 80 ausgebildet ist.

Weiter sind an der Felge 30 Riegeleinrichtungen 70 zum Verriegeln des Filterelements 80 vorgesehen. Die Riegeleinrichtungen 70 sind so ausgebildet, dass eine Drehung des Filterelements 80 aus einer Parallelposition, in welcher das Filterelement 80 parallel zu der Radfläche des Speichenrades 12 angeordnet ist, begrenzt und/oder unterbunden werden kann.

In der beispielhaften Ausführungsform nach Fig. 8 umfasst das Speichenrad 12 zwei Riegeleinrichtungen 70 pro Aufnahmeraum 14. Die Riegeleinrichtungen 70 sind jeweils als U-förmige Elemente mit jeweils einer Basis 72 und zwei Schenkeln 74, 76 ausgebildet. Das Filterelement 80 wird durch die Schenkel 74, 76 axial begrenzt. Die Riegeleinrichtungen 70 sind von außen in Schlitze der Felge 30 einsetzbar, wobei die Schenkel der Riegeleinrichtungen 70 durch die Schlitze 37 hindurchgeführt sind und in den Aufnahmeraum 14 hineinragen.

Das Einsetzen eines Filterelements 80 wird nachfolgend anhand der Figuren 2 und 5 bis 8 beschrieben. Zunächst wird das Filterelement 80 mit seinem Segmentfuß 86 an der Nabe 20 befestigt. Das Filterelement 80 wird hierzu auf die radiale Öffnung 22 beziehungsweise den Rohrstutzen 23 aufgesetzt, wie in Fig. 2 dargestellt. Dabei ist das Filterelement 80 quer zur Radfläche des Speichenrades 12 ausgerichtet.

Das Filterelement 80 wird anschließend bis zu einer Drehaufnahmeposition, in welcher das Filterelement 80 drehbar in dem Aufnahmeraum 14 gelagert ist, in den Aufnahmeraum 14 eingesetzt. In der Drehaufnahmeposition ist das Filterelement 80 quer zur Radfläche des Speichenrades 12 und weitgehend symmetrisch mit Bezug auf den Aufnahmeraum 14 angeordnet. Weiter ist das Filterelement 80 sowohl an der Nabe 20 als auch der Felge 30 drehbar gelagert. Die Position ist in Fig. 5 angedeutet, wobei nur ein unterer beziehungsweise innerer Abschnitt des Filterelements 80 dargestellt ist.

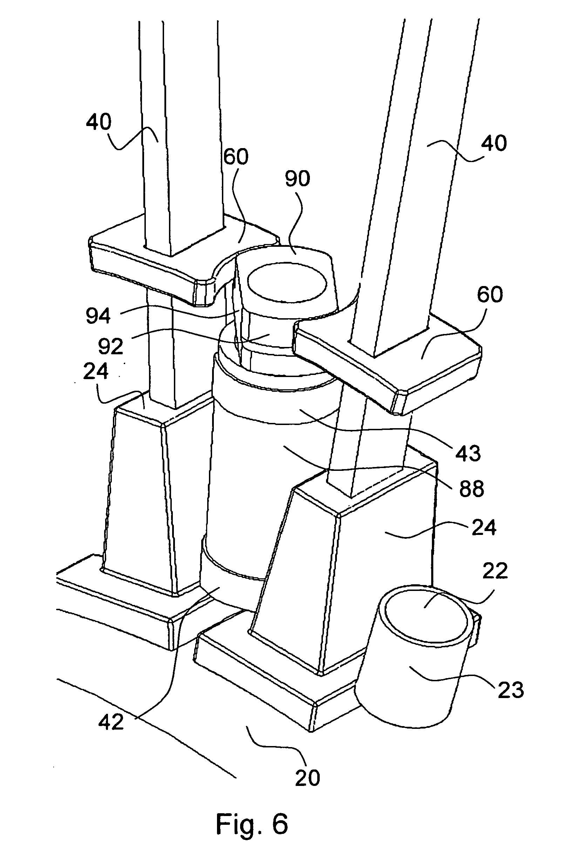

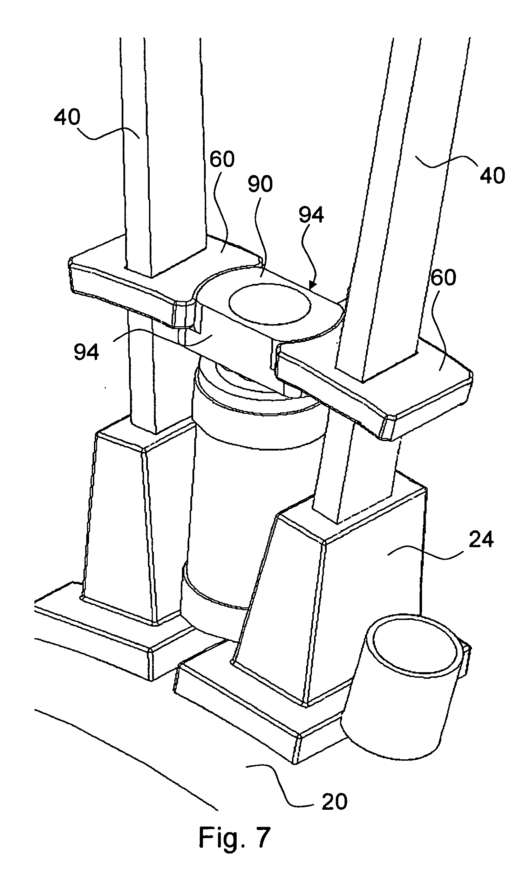

Das Filterelement 80 wird anschließend um seine Längsachse, welche radial zu der Nabe 20 verläuft, um etwa 90° gedreht, wie in den Figuren 6 und 7 dargestellt. Hierdurch wird das Filterelement 80 aus der Drehaufnahmeposition in seine Betriebsposition gebracht, in welcher es durch die Fixierungs- oder Befestigungseinrichtungen 60 gleichzeitig fixiert wird. Um ein erneutes Rückdrehen zu verhindern, wird das Filterelement 80 schließlich durch die Riegeleinrichtungen 70 verriegelt.

## Patentansprüche

1. Filterscheibe mit
- einer Vielzahl von Filterelementen (80) in Form etwa eines Kreisscheibensegmentes, welche zum Bilden einer kreisscheibenförmigen Filterfläche sternförmig an einer Nabe (20) angeordnet sind,
- einer ringförmigen Felge (30), welche entlang eines Außenumfangs der Filterfläche angeordnet ist, und
- mehreren Speichen (40), welche die Nabe (20) mit der Felge (30) verbinden, wobei durch die Speichen (40) und die Felge (30) ein selbsttragendes Speichenrad (12) mit Aufnahmeräumen (14) für die Filterelemente (80) gebildet ist, in welche oder aus welchen die Filterelemente (80) bei geschlossener Felge (30) einsetzbar beziehungsweise entfernbar sind,
**dadurch gekennzeichnet,**
- **dass** die Filterelemente (80) jeweils einen Segmentfuß (86) mit einem Befestigungsabschnitt aufweisen, welcher zur Befestigung des Filterelements (80) an dem Speichenrad (12) mit einer an dem Speichenrad (12) angebrachten Befestigungseinrichtung (60) in Eingriff bringbar ist, und
- **dass** die Filterelemente (80) jeweils durch Drehung um eine radial zur Nabe (20) verlaufende Drehachse zwischen einer Freigabeposition, in welcher der Befestigungsabschnitt (90) von der Befestigungseinrichtung (60) freigegeben ist, und einer Eingriffsposition, in welcher der Befestigungsabschnitt (90) mit der Befestigungseinrichtung (60) in Eingriff ist, verstellbar sind.

2. Filterscheibe nach Anspruch 1,
**dadurch gekennzeichnet,**
- **dass** jeweils zwischen zwei Speichen (40) je ein trapezförmiger Aufnahmeraum (14) gebildet ist, in welchen mindestens ein Filterelement (80) einsetzbar ist, und
- **dass** jedem Aufnahmeraum (14) mindestens eine radiale Öffnung (22) an der Nabe (20) zugeordnet ist, welche mit einer Filtratauslassöffnung eines Filterelements (80) verbindbar ist.

3. Filterscheibe nach Anspruch 1 oder 2,
**dadurch gekennzeichnet,**
**dass** die Nabe (20) als Teil einer Filterwelle (21) ausgebildet ist.

4. Filterscheibe nach einem der Ansprüche 1 bis 3,
**dadurch gekennzeichnet,**
**dass** die Befestigungseinrichtungen (60) zum Befestigen der Filterelemente (80) an dem Speichenrad (12) an der Nabe (20), den Speichen (40) und/oder der Felge (30) angeordnet sind.

5. Filterscheibe nach einem der Ansprüche 1 bis 4,
**dadurch gekennzeichnet,**
**dass** die Filterelemente (80) lösbar, insbesondere über eine Steck-, Schraub-, Klemm- und/oder Bajonettverbindung, an dem Speichenrad (12) befestigt sind.

6. Filterscheibe nach einem der Ansprüche 1 bis 5,
**dadurch gekennzeichnet,**
**dass** an der Nabe (20) und/oder der Felge (30) Drehaufnahmen (50) für die Filterelemente (80) vorgesehen sind, durch welche die Filterelemente (80) drehbar, insbesondere um die zur Nabe (20) radiale Drehachse, gelagert sind.

7. Filterscheibe nach Anspruch 6,
**dadurch gekennzeichnet,**
**dass** die Drehaufnahmen (50) jeweils mittig zwischen zwei Speichen (40) vorgesehen sind.

8. Filterscheibe nach einem der Ansprüche 1 bis 7,
**dadurch gekennzeichnet,**
**dass** Riegeleinrichtungen (70) vorgesehen sind, durch welche die Filterelemente (80) in einer Betriebsposition verriegelbar sind, in welcher die Filterelemente (80) parallel zu einer Radfläche des Speichenrades (12) angeordnet sind.

9. Scheibenfilter mit mindestens einer Filterscheibe (10) gemäß einem der Ansprüche 1 bis 8 und mindestens einem Suspensionstrog zur Aufnahme einer zu filternden Suspension, in welchen die Filterscheibe (10) bereichsweise eingetaucht ist.

10. Filtrationsverfahren zum Filtrieren einer Suspension mit einer Filterscheibe, insbesondere nach einem der Ansprüche 1 bis 8,
mit
- einer Vielzahl von Filterelementen (80) in Form etwa eines Kreisscheibensegmentes, welche zum Bilden einer kreisscheibenförmigen Filterfläche sternförmig an einer Nabe (20) angeordnet sind,
- einer ringförmigen Felge (30), welche entlang des Außenumfangs der Filterfläche angeordnet ist, und
- mehreren Speichen (40), welche die Nabe (20) mit der Felge (30) verbinden, wobei durch die Speichen (40) und die Felge (30) ein selbsttragendes Speichenrad (12) mit Aufnahmeräumen (14) für die Filterelemente (80) gebildet ist,
**dadurch gekennzeichnet,**
**dass** mindestens ein Filterelement (80) bei geschlossener Felge (30) in einen Aufnahmeraum (14) eingesetzt oder aus diesem entfernt und durch eine Drehung um eine zur Nabe (20) radiale Drehachse an dem Speichenrad befestigt wird.

11. Filtrationsverfahren nach Anspruch 10,
**dadurch gekennzeichnet,**
**dass** mindestens ein Filterelement (80) aus einem Aufnahmeraum (14) entfernt wird, ein Filtermedium des Filterelements (80) ausgetauscht oder aufbereitet wird und anschließend das Filterelement (80) mit dem ausgetauschten oder aufbereiteten Filtermedium erneut in den Aufnahmeraum (14) eingesetzt wird.

## Claims

1. Filter disk with
- a plurality of filter elements (80) in the approximate shape of a circular disk segment, which are arranged in a star-shaped manner on a hub (20) in order to form a circular disk-shaped filter surface,
- an annular rim (30), which is arranged along an outer circumference of the filter surface, and
- several spokes (40), which connect the hub (20) to the rim (30), wherein the spokes (40) and the rim (30) form a self-supporting spoked wheel (12) with receiving spaces (14) for the filter elements (80), into which the filter elements (80) can be inserted or from which they can be removed when the rim (30) is closed,
**characterized in that**
- the filter elements (80) each have a segment base (86) with a fastening section, which, for the purpose of fastening the filter element (80) on the spoked wheel (12), can be brought into engagement with a fastening means (60) fixed on the spoked wheel (12), and
- **in that** through rotation about an axis of rotation running radially to the hub (20) the filter elements (80) are each adjustable between a released position, in which the fastening section (90) is released from the fastening means (60), and an engaged position, in which the fastening section (90) is engaged with the fastening means (60).

2. Filter disk according to claim 1,
**characterized in that**
- between two spokes (40) a trapezoidal receiving space (14) is formed in each case, into which at least one filter element (80) can be inserted, and
- each receiving space (14) is assigned at least one radial opening (22) on the hub (20), which can be connected to a filtrate outlet opening of a filter element (80).

3. Filter disk according to claim 1 or 2,
**characterized in that**
the hub (20) is designed as part of a filter shaft (21).

4. Filter disk according to any one of claims 1 to 3,
**characterized in that**
the fastening means (60) for fastening the filter elements (80) on the spoked wheel (12) are arranged on the hub (20), the spokes (40) and/or the rim (30).

5. Filter disk according to any one of claims 1 to 4,
**characterized in that**
the filter elements (80) are fastened in a detachable manner, in particular by way of a plug, screw, clamping and/or bayonet connection, on the spoked wheel (12).

6. Filter disk according to any one of claims 1 to 5,
**characterized in that**
on the hub (20) and/or the rim (30) rotary receiving parts (50) for the filter elements (80) are provided, through which the filter elements (80) are supported in a rotatable manner, in particular about the axis of rotation located radially to the hub (20).

7. Filter disk according to claim 6,
**characterized in that**
the rotary receiving parts (50) are each provided centrally between two spokes (40).

8. Filter disk according to any one of claims 1 to 7,
**characterized in that**
locking means (70) are provided, through which the filter elements (80) are lockable in an operating position, in which the filter elements (80) are arranged parallel to a wheel surface of the spoked wheel (12).

9. Disk filter with at least one filter disk (10) according to any one of claims 1 to 8 and at least one suspension trough for receiving a suspension to be filtered, in which the filter disk (10) is immersed in some areas.

10. Filtration method for filtering a suspension with a filter disk, in particular according to any one of claims 1 to 8,
with
- a plurality of filter elements (80) in the approximate shape of a circular disk segment, which are arranged in a star-shaped manner on a hub (20) in order to form a circular disk-shaped filter surface,
- an annular rim (30), which is arranged along the outer circumference of the filter surface, and
- several spokes (40), which connect the hub (20) to the rim (30), wherein the spokes (40) and the rim (30) form a self-supporting spoked wheel (12) with receiving spaces (14) for the filter elements (80),
**characterized in that**
when the rim (30) is closed at least one filter element (80) is inserted into or removed from a receiving space (14) and fastened on the spoked wheel through a rotation about an axis of rotation located radially to the hub (20).

11. Filtration method according to claim 10,
**characterized in that**
at least one filter element (80) is removed from a receiving space (14), a filter medium of the filter element (80) is replaced or treated and subsequently the filter element (80) with the replaced or treated filter medium is inserted again into the receiving space (14).

## Revendications

1. Disque filtrant avec
- une pluralité d'éléments filtrants (80) approximativement en forme de segments de plaque circulaire, qui sont disposés en étoile sur un moyeu (20) de façon à former une surface filtrante en forme de plaque circulaire,
- une jante annulaire (30) qui est placée le long d'une circonférence extérieure de la surface filtrante, et
- plusieurs rayons (40) qui relient le moyeu (20) à la jante (30), les rayons (40) et la jante (30) formant une roue à rayons autoporteuse (12) avec des logements (14) pour les éléments filtrants (80), dans lesquels ou depuis lesquels les éléments filtrants (80) peuvent être insérés ou retirés quand la jante (30) est fermée,
**caractérisé en ce que**
- les éléments filtrants (80) présentent chacun un pied de segment (86) avec une section de fixation qui, pour fixer l'élément filtrant (80) sur la roue à rayons (12), peut être mise en prise avec un dispositif de fixation (60) placé sur la roue à rayons (12), et
- **en ce que**, par rotation autour d'un axe de rotation radial vis-à-vis du moyeu (20), les éléments filtrants (80) peuvent être déplacés chacun entre une position de libération dans laquelle la section de fixation (90) est libérée par le dispositif de fixation (60) et une position de prise dans laquelle la section de fixation (90) est en prise avec le dispositif de fixation (60).

2. Disque filtrant selon la revendication 1,
**caractérisé en ce que**
- entre deux rayons (40) est formé à chaque fois un logement trapézoïdal (14) dans lequel au moins un élément filtrant (80) peut être inséré, et
- **en ce qu'**à chaque logement (14) est associée au moins une ouverture radiale (22) sur le moyeu (20), laquelle peut être reliée à une ouverture de sortie de filtrat d'un élément filtrant (80).

3. Disque filtrant selon la revendication 1 ou 2, **caractérisé en ce que** le moyeu (20) est réalisé sous la forme d'une partie d'un arbre de filtration (21).

4. Disque filtrant selon l'une des revendications 1 à 3, **caractérisé en ce que** les dispositifs de fixation (60) servant à fixer les éléments filtrants (80) sur la roue à rayons (12) sont placés sur le moyeu (20), sur les rayons (40) et/ou sur la jante (30).

5. Disque filtrant selon l'une des revendications 1 à 4, **caractérisé en ce que** les éléments filtrants (80) sont fixés à la roue à rayons (12) d'une manière amovible, en particulier par une liaison à fiche, à vis, à serrage et/ou à baïonnette.

6. Disque filtrant selon l'une des revendications 1 à 5, **caractérisé en ce que** des logements rotatifs (50) sont prévus pour les éléments filtrants (80) sur le moyeu (20) et/ou la jante (30), logements grâce auxquels les éléments filtrants (80) sont montés rotatifs, en particulier autour de l'axe de rotation radial vis-à-vis du moyeu (20).

7. Disque filtrant selon la revendication 6, **caractérisé en ce que** les logements rotatifs (50) sont prévus à chaque fois de manière centrée entre deux rayons (40).

8. Disque filtrant selon l'une des revendications 1 à 7, **caractérisé en ce que** des dispositifs de verrouillage (70) sont prévus, avec lesquels les éléments filtrants (80) peuvent être verrouillés dans une position de service dans laquelle les éléments filtrants (80) sont disposés parallèlement à une surface de roue de la roue à rayons (12).

9. Filtre à disque avec au moins un disque filtrant (10) selon l'une des revendications 1 à 8 et au moins un bac à suspension destiné à recevoir une suspension à filtrer, dans lequel le disque filtrant (10) est placé par endroits.

10. Procédé de filtration pour filtrer une suspension avec un disque filtrant, en particulier selon l'une des revendications 1 à 8,
avec
- une pluralité d'éléments filtrants (80) approximativement en forme de segments de plaque circulaire, qui sont disposés en étoile sur un moyeu (20) de façon à former une surface filtrante en forme de plaque circulaire,
- une jante annulaire (30) qui est placée le long d'une circonférence extérieure de la surface filtrante, et
- plusieurs rayons (40) qui relient le moyeu (20) à la jante (30), les rayons (40) et la jante (30) formant une roue à rayons autoporteuse (12) avec des logements (14) pour les éléments filtrants (80),
**caractérisé en ce qu'**au moins un élément filtrant (80) est inséré dans un logement (14) avec la jante fermée ou est retiré de celui-ci et, par une rotation autour d'un axe de rotation radial vis-à-vis du moyeu (20), il est fixé à la roue à rayons.

11. Procédé de filtration selon la revendication 10, **caractérisé en ce qu'**au moins un élément filtrant (80) est retiré d'un logement (14), un milieu filtrant de l'élément filtrant (80) est remplacé ou traité, puis l'élément filtrant (80) est réinséré dans le logement (14) avec le milieu filtrant remplacé ou traité.
